# EUROPEAN PATENT APPLICATION

(11) **EP 2 755 187 A2**
(43) Date of publication of application: **16.07.2014**
(21) Application number: 14150539.6
(22) Date of filing: 09.01.2014
(51) Int. Cl.: G06T 13/20

(54) **3d-animation effect generation method and system**

(30) Priority: 11.01.2013 RU 2013101015; 01.04.2013 KR 20130035465
(71) Applicant: Samsung Electronics Co., Ltd, Gyeonggi-do 443-742 (KR)
(72) Inventor: Vilkin, Aleksey, Moscow 127018 (RU); Safonov, Ilya, Moscow 127018 (RU); Kryzhanovskiy, Konstantin, Moscow 127018 (RU)
(74) Representative: Brandon, Paul Laurence

(57) **Abstract**

Provided are a method and apparatus for generating three-dimensional (3D) animation effects. The method includes: detecting at least one area of interest on a visual multimedia object and determining at least one feature of the detected area of interest; building a 3D scene that comprises the visual multimedia object; generating at least one 3D visual object of an animation effect in the 3D scene, according to the area of interest and the feature of the area of interest; and performing at least one of conversion of the 3D visual object in a space of the 3D scene and conversion of the 3D scene, so that the 3D animation effect is generated as a result of visualizing the 3D scene.

## Description

### RELATED APPLICATIONS

This application claims priority from Russian Patent Application No. 2013101015, filed on January 11, 2013, in the Russian Patent Office and Korean Patent Application No. 10-2013-0035465, filed on April 1, 2013, in the Korean Intellectual Property Office, the disclosures of which are incorporated herein in their entirety by reference.

### BACKGROUND

### 1. Field

Methods and apparatuses consistent with exemplary embodiments relate to generating a three-dimensional (3D) animation effect that is implemented on a 3D display in real time.

### 2. Description of the Related Art

Various approaches to adding dynamic two-dimensional (2D) art effects to still images are known from prior-art. In particular, such solutions were widely known in many special editing tools, such as Adobe After Effects and Ulead Video Studio.

A 2D image received by using a digital camera can be converted to an art image by performing a conversion executable on a computer so that a natural image is formed as drawn by human's hand, such as an oil-painted picture, an illustration drawn by a brush, an animation image or a mosaic.

Recently, three-dimensional (3D) displays and 3D televisions (TVs) became very popular. However, the main volume of visual resources are still 2D. Therefore, many technical solutions are directed to conversion of 2D images and video into 3D. However, solutions known from prior-art are only to dispose a stereoscopic or moving camera, move a set of one or more animation objects, and determine a distance between a camera and objects according to a non-linear ratio, in order to visualize an image.

3D displays are widespread now, in particular, 3D TVs with passive or active glasses. A consumer stores a considerable amount of 2D photos and video. However, 3D photos and video are spread in a much smaller degree, although there is a tendency of increase in amount of 3D content. Solutions known from prior-art do not allow real-time generation of real 3D animation effects "on-the-fly".

### SUMMARY

One or more exemplary embodiments provide a method and apparatus for generating a realistic 3D animation effect in real time, for multimedia objects such as a 2D image, a 3D image, or video.

Various aspects will be set forth in part in the description which follows and, in part, will be apparent from the description, or may be learned by practice of the presented embodiments.

According to an aspect of an exemplary embodiment, there is provided a method of generating a 3D animation effect, the method including: detecting at least one area of interest on a visual multimedia object and determining at least one feature of the detected area of interest; building a 3D scene that comprises the visual multimedia object; generating at least one 3D visual object of an animation effect in the 3D scene, according to the area of interest and the feature of the area of interest; and performing at least one of conversion of the 3D visual object in a space of the 3D scene and conversion of the 3D scene, so that the 3D animation effect is generated as a result of visualizing the 3D scene.

The visual multimedia object may include at least one of a 2D image, a 3D image, and a video sequence.

While the area of interest on the visual multimedia object is detected, the visual multimedia object may be pre-processed by at least one of brightness adjustment, staining, gamma correction, white color balance adjustment, and color system conversion.

The detecting at least one area of interest may be detecting a plurality of areas of interest, and the generating the 3D visual object may be performed by randomly selecting a selected number of areas of interest from among the detected plurality of areas of interest.

The detecting at least one area of interest may be detecting a plurality of areas of interest, and the generating the 3D visual object may be performed by selecting a selected number of areas of interest from among the detected plurality of areas of interest based on features of the selected number of areas of interest.

The building the 3D scene may be performed by using the visual multimedia object as a texture which is superimposed on a background of the 3D scene.

The building the 3D scene may be performed by detecting information about a scene depth regarding the visual multimedia object, and the detected information is used for building the background of the 3D scene.

The conversion of the 3D visual object may include at least one of moving, rotation, distortion, resizing, and merging of at least two 3D objects, or dividing of a 3D object into at least two new 3D visual objects.

The visualizing the 3D scene may be performed by using the visual multimedia object as a background of the 3D scene, and generating a 3D animation effect for the visual multimedia object.

According to an aspect of another exemplary embodiment, there is provided an apparatus for generating a 3D animation effect on a display, the apparatus including: an interest area detection module configured to detect at least one area of interest on a visual multimedia object; a feature determining module configured to determine at least one feature of the detected area of interest on the visual multimedia object; a 3D visual object generation module configured to generate at least one 3D visual object based on the feature of the area of interest; a 3D-scene generation module configured to generate a 3D scene based on the visual multimedia object and the generated 3D visual object; a 3D conversion module configured to convert the 3D visual object in a space of the 3D scene; and a frame generation module configured to generate 3D frames by using the 3D scene that comprises the converted 3D visual object.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a diagram illustrating several frames in a 3D animation, in which a "soap bubble" effect is applied to a still image, according to an exemplary embodiment;
FIG. 2 is a flowchart of a method, performed by a 3D animation effect generation system, of generating 3D animation effects on a 3D display in real time, according to an exemplary embodiment;
FIG. 3 is a flowchart of a method of dynamically (on-the-fly) generating a 3D animation effect on a 2D or 3D image in which a motion of an object is not present, according to an exemplary embodiment;
FIG. 4 is a block diagram of a system for generating 3D animation effects on a 3D display in real time, according to an exemplary embodiment;
FIG. 5 is a flowchart of a method of generating a depth map, according to an exemplary embodiment;
FIG. 6 is a flowchart of a method of detecting an attention zone, according to an exemplary embodiment;
FIG. 7 is a flowchart of a method of detecting a text area, according to an exemplary embodiment;
FIG. 8 is a flowchart of a method of detecting areas of interest for "Flashing Light" that is a 3D animation effect, according to an exemplary embodiment;
FIG. 9 is a flowchart of a method of generating a "soap bubble" effect that is a 3D animation effect, according to an exemplary embodiment;
FIG. 10 is a flowchart of a method of generating a "Flashing Light" effect that is a 3D animation effect, according to an exemplary embodiment; and
FIG. 11 is a flowchart of a method of generating a "beacon light" effect that is a 3D animation effect, according to an exemplary embodiment.

### DETAILED DESCRIPTION

Reference will now be made in detail to exemplary embodiments, which are illustrated in the accompanying drawings, wherein like reference numerals refer to like elements throughout. In this regard, the exemplary embodiments may have different forms and the inventive concept should not be construed as being limited to the descriptions set forth herein. Accordingly, the exemplary embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

In the description of the exemplary embodiments, certain detailed explanations of the related art are omitted when it is deemed that they may unnecessarily obscure the essence of the inventive concept.

It will be understood that when an element is referred to as being "connected to" or "coupled to" another element, it may be "directly connected or coupled" to the other element, or "electrically connected to" the other element with intervening elements therebetween. It will be further understood that the terms "comprises", "comprising", "includes", and/or "including" when used herein, specify the presence of components, but do not preclude the presence or addition of one or more other components, unless otherwise specified.

In describing the exemplary embodiments herebelow, a multimedia object for receiving a three-dimensional (3D) animation effect on a screen for displaying 3D images may be at least one from among a plane 2D image, a solid 3D image, and a moving image.

Hereinafter, the exemplary embodiments will be described more fully with reference to the accompanying drawings.

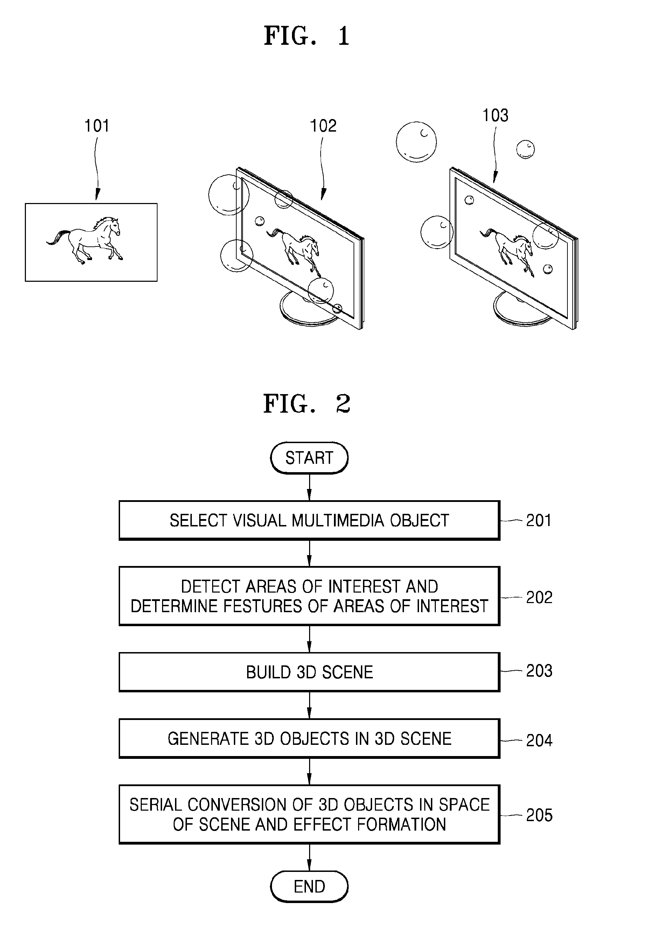

FIG. 1 is a diagram illustrating several frames in a 3D animation, in which a "soap bubble" effect is applied to a still image, according to an exemplary embodiment.

Parameters of soap-bubbles, such as a size, a color, a moving path, etc. may be applied to an image that allows generating frames of animation which practically do not repeat in time. A user sees only the still image 101 prior to beginning of generation of animation. Additionally, when an animation effect is generated, the user may see soap-bubbles 102 and 103 flying in a 3D space in front of the image.

FIG. 2 is a flowchart of a method, performed by a 3D animation effect generation system, of generating 3D animation effects on a 3D display in real time, according to an exemplary embodiment.

In operation 201, a visual multimedia object is selected. The visual multimedia object may be a motionless (static) 2D or 3D image, or a video sequence.

In operation 202, at least one area of interest is detected on the visual multimedia object, and at least one feature of the area of interest is determined. The area of interest may be an area that is selected to process an image in the visual multimedia object. The area of interest may be used, for example, to process a necessary area in an image, instead of a whole image. The area of interest and feature may vary with a type of an animation effect. During detecting of the area of interest on a visual multimedia object, preprocessing of the visual multimedia object may be executed. The object may be pre-processed by using, for example, at least one of the following: brightness adjustment, staining, gamma-correction, white color balance adjustment, and color system conversion.

In operation 203, a 3D scene that includes the selected visual multimedia object is built. Here, the selected visual multimedia object is used as a texture which is superimposed on a background of the 3D scene. For a 3D visual object, information about a depth of a scene that is represented on the selected visual multimedia object may be detected. The 3D visual object may be an object that is included in the selected visual multimedia object, or a distinct object, or a visual object to which a 3D effect will be applied. The information about the depth of the scene may be used to build a background of the 3D scene. As described above, the selected visual multimedia object is superimposed on the background of the 3D scene as a texture. In operation 203, operations 204 and 205 may be performed. However, embodiments of the present invention are not limited thereto.

In operation 204, at least one 3D visual object is generated according to the area of interest and its feature, and the 3D visual object is placed in the 3D scene. The 3D visual object includes a 3D animation effect which will appear in the 3D scene. There are two methods of generating the 3D visual object. In the first method, several areas of interest may be randomly selected from all detected areas of interest. In the second method, several areas of interest may be selected from all detected areas of interest according to features of the several areas of interest.

In operation 205, conversion of the 3D object and generation of a 3D animation effect in a space of the 3D scene are performed. If the conversion of the 3D object may be performed serially. When serial conversion of the 3D object in the 3D scene space is performed, following conversions may be performed: moving, rotation, distortion, resizing, merging of at least two 3D objects in one, dividing of object into at least two new 3D visual objects. Besides, an additional animation effect for a visual object, which is used as a background of the scene, may be generated.

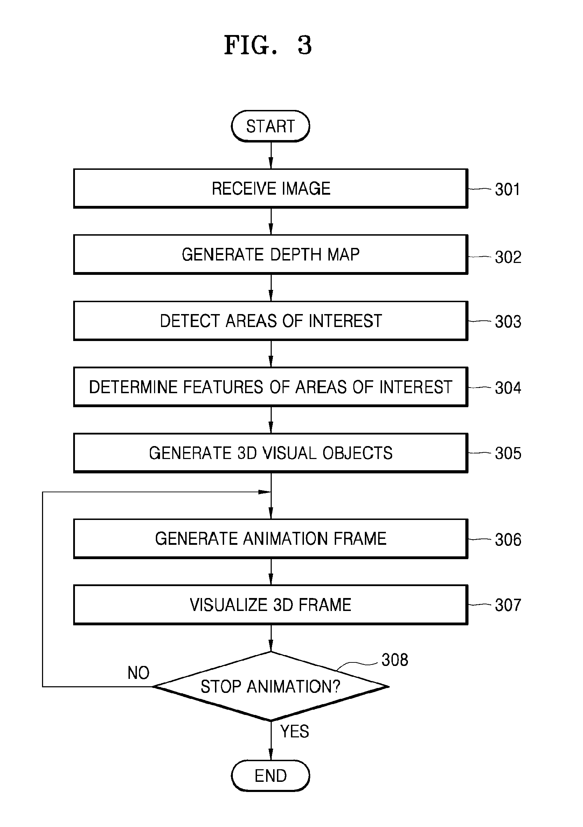

FIG. 3 is a flowchart of a method of dynamically (on-the-fly) generating a 3D animation effect on a 2D or 3D image in which a motion of an object is not present, according to an exemplary embodiment.

In operation 301, an image is received from an appropriate source, for example, by reading from a hard disk.

Then, in operation 302, a depth map is generated for the image.

In operation 303, at least one area of interest is detected on the image. In operation 304, at least one feature is determined for each of the at least one area of interest.

In operation 305, at least one 3D visual object is generated based on the determined feature.

In operation 306, a plurality of 3D frames of animation are generated by combining the 3D visual object and at least one image in a 3D scene. The 3D visual object may be transformed and displayed for each 3D frame. The 3D visual object may be placed in a different location in each 3D frame. Accordingly, when the generated 3D frames are played, the 3D visual object may be displayed to move or be transformed in a space of the 3D scene.

In operation 307, frames of the animation are visualized.

In operation 308, whether the animation is to be stopped is determined. If the animation is not to be stopped, operation 306 is performed. Until the animation is stopped, operations 306 and 307 are continuously repeated.

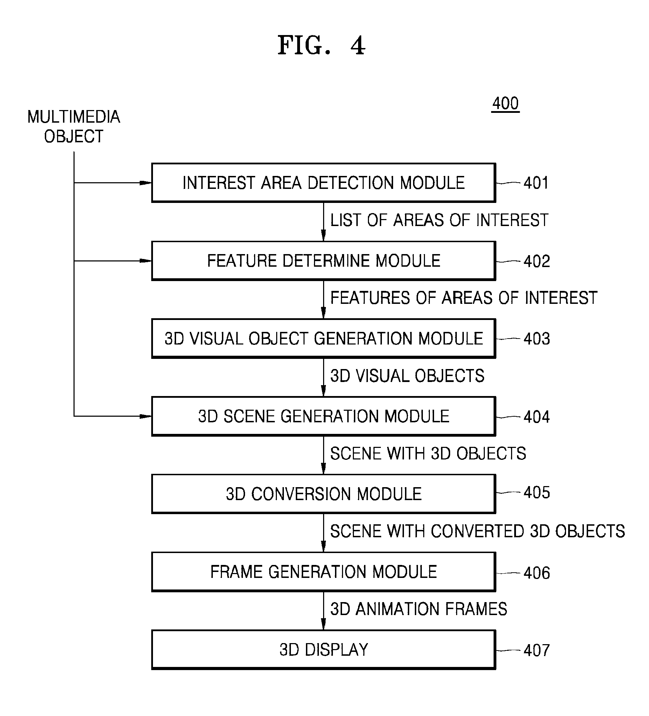

FIG. 4 is a block diagram of a system for generating 3D animation effects on a 3D display in real time, according to an exemplary embodiment.

Referring to FIG. 4, a system 400 for generating 3D animation effects may include an interest area detection module 401, a feature determining module 402, a 3D visual object generation module 403, a 3D scene generation module 404, a 3D conversion module 405, a frame generation module, and a 3D display 407.

The interest area detection module 401 receives a visual multimedia object as an input. The interest area detection module 401 detects at least one area of interest on the visual multimedia object. The feature determining module 402 receives a list of the at least one detected area of interest and determines at least one feature of the area of interest.

The feature determining module 402, which receives the visual multimedia object and the list of the deterred area of interest, determines the feature of the area of interest on the visual multimedia object. The determined feature of the area of interest is input to the 3D visual object generation module 403 that generates at least one 3D visual object.

The determined feature of the area of interest is input to the 3D visual object generation module 403. The 3D visual object generation module 403 generates the 3D visual object according to the feature of the area of interest. The generated 3D visual object is input to the 3D-scene generation module 404 that generates a 3D scene.

The 3D-scene generation module 404, which receives the visual multimedia object and the 3D visual object, builds a 3D scene for the visual multimedia object and the generated 3D visual object. The 3D scene is input to the 3D conversion module 405.

The 3D conversion module 405, which receives the 3D scene, converts the 3D object in a space of the 3D scene. If two or more 3D objects are generated by the 3D visual object generation module 403, the 3D conversion module 405 serially converts the two or more 3D objects in the space of the 3D scene. The converted 3D object and the 3D scene is input to the frame generation module 406.

The frame generation module 406, which receives the converted 3D object and the 3D scene, generates a plurality of 3D frames in a format suitable to be visualization on a 3D display, and then, outputs the generated 3D frames to the 3D display 407 that visualizes frames.

The modules 401 to 406 included in the system 400 for generating 3D animation effect as illustrated in FIG. 4 and described above may be implemented in a form of a system on a chip (SoC), a field-programmable gate array (FPGA), or an application-specific integrated circuit (ASIC).

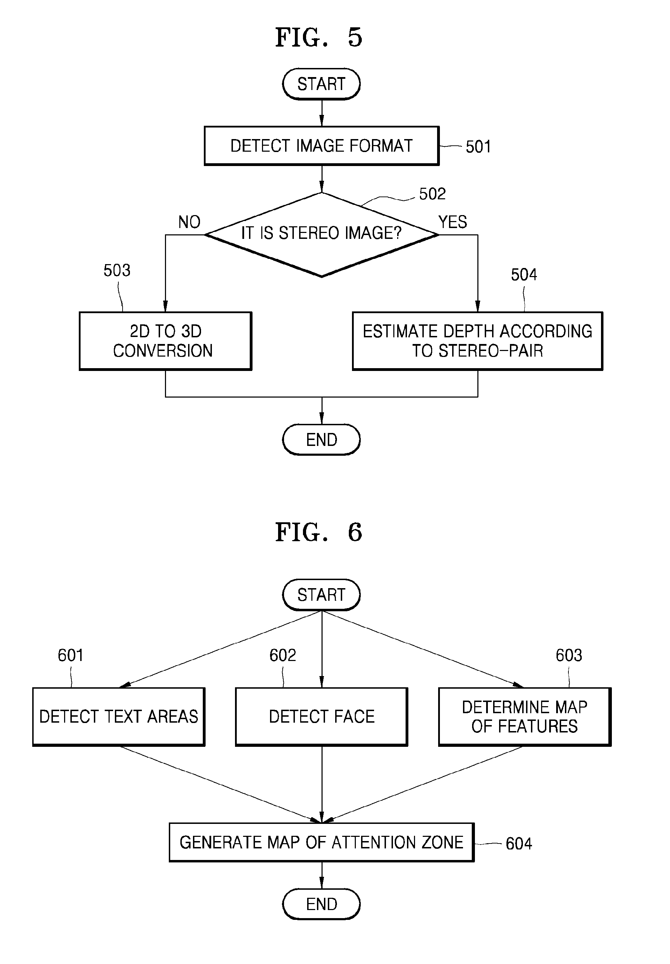

FIG. 5 is a flowchart of a method of generating a depth map that is used to define parameters of visual objects, particularly, a moving path, according to an exemplary embodiment. Generating the depth map may correspond to operation 302 of FIG. 3. In operation 501, an image format is determined. If an image format is a stereo-image (condition 502), one of methods of estimating a scene depth and a disparity map on a stereo pair may be used to receive a depth map. A disparity refers to a difference between image points in a stereo image, which are viewed by the left and right eyes of a human being. Objects that are located in a different distance from each other in the image may have a different disparity value from each other. The estimation method may be, for example, a method that is described in "Robust Phase Correlation Based Sub-pixel Disparity Estimation" (H. Yan and J. Guo Liu, Proc. of 4th SEAS DTC Technical Conference, 2009).

In operation 503, if an image type is a plane image, one of methods of converting static images from 2D to 3D is used for receiving a depth map. For example, the conversion method may be a method that is performed based on detection of attention zones, as described in article "2D-to-3D conversion by using visual attention analysis" (J. Kim, A. Baik, Y. Ju Jung, D. Park, Proc. SPIE 7524, Stereoscopic Displays and Applications XXI, 2010).

Attention zones may be used not only for conversion 2D to 3D but also for some types of animation effects to be considered as interest areas. According to an exemplary embodiment, the attention zones are received as a result of combination of areas with an image of a text, an area of an image of a human face, and map of features/a saliency map that is determined according to a model of human instant sight.

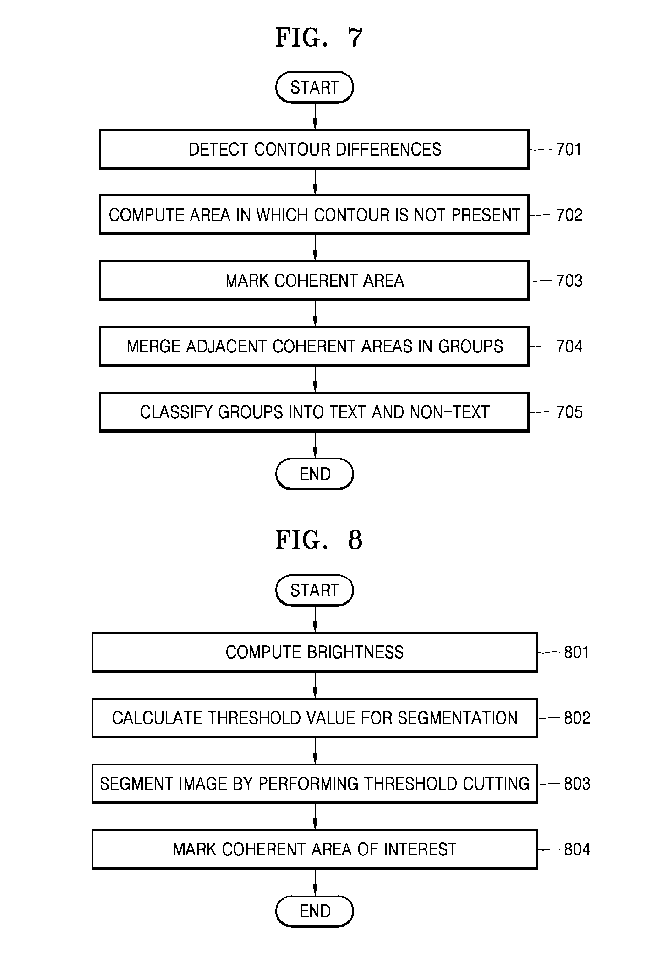

FIG. 6 is a flowchart of a method of detecting an attention zone, according to an exemplary embodiment. In operation 601, a text area is detected. This is described by referring to FIG. 7. In operation 602, an area of a human face image is detected. An area of a human face image may be detected by using a method that is described in article "An Improvement of face detection algorithm for color photos" (Egorova, M.A., Murynin, A.B., Safonov, I.V., Pattern Recognition and Image Analysis, vol. 19, No. 4, pp. 634-640, 2009). In operation 603, a map of the features is computed. The map of the features may be effectively computed by using a method that is described in article "Global Contrast based Salient Region Detection" (M.M. Cheng, G.X. Zhang, N.J. Mitra X. Huang, S.M. Hu, Proc. of IEEE CVPR, pp. 409-416, 2011). In operation 604, all the detected areas and the map of the features are combined in a map of an attention zone. This may be performed by summation of weights of images of the marked areas of the text and human faces, and also maps of the features.

FIG. 7 is a flowchart of a method of detecting a text area, according to an exemplary embodiment. In operation 701, a contour difference may be detected. For this, a Laplacian of Gaussian (LoG) filter, with subsequent threshold cutting, may be employed. In operation 702, an area in which a contour is not present is computed, and the computed area is further restored by performing morphological operations. An operation "close" may be used in an elementary case. In operation 703, coherent areas are marked by the image with the detected contour differences. In operation 704, adjacent coherent areas are combined in groups. Each group is classified as a text area and a non-text area. A method, which is described in article "Bottom-up Document Segmentation Method Based on Textural Features" (A.M. Vil'kin, I.V. Safonov, M.A. Egorova, Pattern Recognition and Image Analysis, vol. 21, No. 3, pp. 565-568, 2011) may be used for the classification thereof.

An example of the above exemplary embodiments may be a 3D animation art effect "Flashing Light". The "Flashing Light" art effect shows flashing and rotation of white or colored stars that are located in small bright fragments of an image. FIG. 8 is a flowchart of a method of detecting areas of interest for a "Flashing Light" effect, according to an exemplary embodiment. In operation 801, a histogram of brightness of an image pixel is constructed. In operation 802, a computation of a threshold value for segmentation is further performed. In operation 803, the image is segmented by performing threshold cutting so as to find a brightest site in the image. In operation 804, marking of coherent areas, which are areas of interest to which the "Flashing Light" art effect will be applied, is further performed. The set of features are computed for each area of interest. Additionally, the set of the features may include at least one from the following:
- average values of color components in an area limit;
- coordinates of center of weights;
- an area ratio of area of interest to image area;
- rotundity coefficient - the ratio of diameter of a circle with area equal to area of area of interest to largest of the linear sizes of area of interest; and
- similarity coefficient to a small light source - the integral parameter calculated as weighed sum of maximum brightness of area of interest, average brightness, rotundity coefficient and relative area of area of interest.

Those areas which features satisfy preset criteria are further selected from all areas of interest. A module for generating 3D visual objects generates a list of visual objects. The list of the visual objects may include, for example, flashing and rotating stars, or location, size, or color definition of the respective stars according to features of areas of interest.

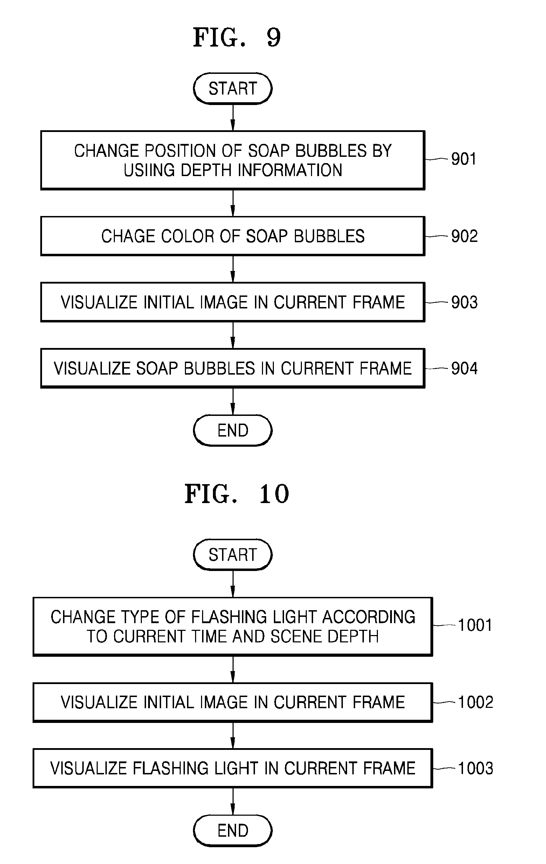

FIG. 9 is a flowchart of a method of generating a "soap bubbles" effect that is a 3D animation effect, according to an exemplary embodiment. The soap bubble effect may display soap bubbles flying in an image. In operation 901, positions of the soap bubbles are changed by using information about a depth. In operation 902, a color of the soap bubble varies with a direction of lighting in an appropriate area of the image. In operation 903, after parameters are adjusted, a source image is visualized in a current frame of animation. In operation 904, the soap bubble is visualized. The visualizing of the soap bubble may be performed in the current frame.

FIG. 10 is a flowchart of a method of generating a "Flashing Light" effect that is a 3D animation effect, according to an exemplary embodiment. In operation 1001, a type of flashing light varies depending on a current time and a depth of a scene. A coordinate on a Z-axis may be adjusted according to a depth map. Initial values of a size, brightness, and a color may be determined based on a z-coordinate and light source parameters. Further parameters vary step-by-step in a process of time for generating brighter impression for a user. In operation 1002, after parameters are adjusted, a source image is visualized in a current frame of animation. In operation 1003, flashing light is visualized, as a final step of preparing the current frame of the animation.

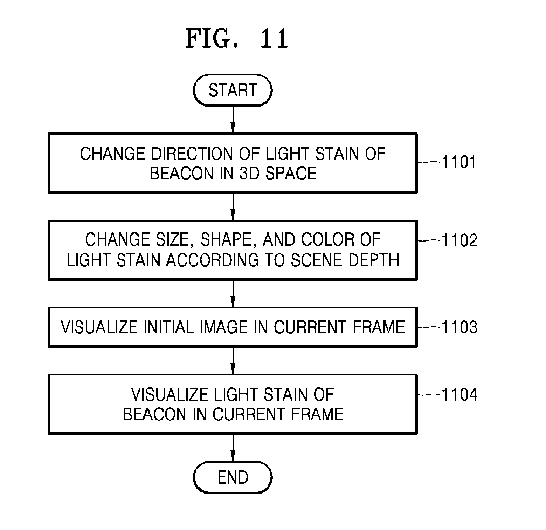

FIG. 11 is a flowchart of a method of generating a "beacon light" effect that is an animation effect, according to an exemplary embodiment. The "beacon light" effect may be formed in an image of a light stain that is obtained from a light cone of a beacon. The light stain is located in a bright place that is a most appropriate place in the image at beginning, and then, moves to an attention zone of the image. In operation 1101, a direction of the light stain of the beacon light is changed in a 3D space. A position of a light stain of the beacon light may vary as moving over the image. A moving path of the beacon light is generated on the attention zone. The attention zone is generated as described above. In operation 1102, a size, brightness, a shape, and a color of the light stain are determined according to a scene depth. This may allow to generate an effect of providing a realistic impression to a user. In operation 1103, after parameters are adjusted, a blackout source image in a current frame of an animation is visualized. Darkening may be applied to make a light stain more marked. In operation 1104, the light stain of the beacon light is visualized as a final step of preparing the current frame of the animation.

Appearance of an effect may be revised for content of a multimedia object, such as content that is represented on a photograph. According to one or more of the above embodiments, a method of dynamically (on-the-fly) generating a 3D animation effect may provide an impressive and attractive method in which multimedia objects may be reviewed on modern 3D displays. The above embodiments may provide a satisfactory experience to a user even when the user reviews 2D photos. According to the above embodiments, a method and a system for dynamically generating a 3D animation effect may be used for devices that include 3D displays and may employ display functions of multimedia objects. Examples of such devices may be a digital 3D TV with a multimedia capability, a mobile phone, a tablet PC, a digital camera, a photo frame, or software used for a PC for multimedia display.

It will be understood by those skilled in the art that various deletions, substitutions, and changes in form and details of the apparatus and method, described above, may be made therein without departing from the spirit and scope of the invention as defined by the appended claims.

In addition, other embodiments can also be implemented through computer-readable code/instructions in/on a medium, e.g., a computer-readable medium, to control at least one processing element to implement any above-described embodiment. The medium can correspond to any medium/media permitting the storage and/or transmission of the computer-readable code.

The computer-readable code can be recorded/transferred on a medium in a variety of ways, with examples of the medium including recording media, such as magnetic storage media (e.g., ROM, floppy disks, hard disks, etc.) and optical recording media (e.g., CD-ROMs or DVDs), and transmission media such as Internet transmission media. Thus, the medium may be such a defined and measurable structure including or carrying a signal or information, such as a device carrying a bitstream according to one or more embodiments. The media may also be a distributed network, so that the computer-readable code is stored/transferred and executed in a distributed fashion. Furthermore, the processing element could include a processor or a computer processor, and processing elements may be distributed and/or included in a single device.

It should be understood that the above embodiments should be considered in a descriptive sense only and not for purposes of limitation. Descriptions of features or aspects within each embodiment should typically be considered as available for other similar features or aspects in other embodiments. For example, each component, described in a singular form, may be executed in a distributed form. Likewise, components, described in a distributed form, may be executed in a combined form.

While one or more embodiments have been described with reference to the figures, it will be understood by those of ordinary skill in the art that various changes in form and details may be made therein without departing from the spirit and scope of the inventive concept as defined by the following claims.

## Claims

1. A method of generating a three-dimensional (3D) animation effect, the method comprising:
detecting at least one area of interest on a visual multimedia object and determining at least one feature of the detected area of interest;
building a 3D scene that comprises the visual multimedia object;
generating at least one 3D visual object of an animation effect in the 3D scene, according to the area of interest and the feature of the area of interest; and
performing at least one of conversion of the 3D visual object in a space of the 3D scene and conversion of the 3D scene, so that the 3D animation effect is generated as a result of visualizing the 3D scene.

2. The method of claim 1, wherein the visual multimedia object comprises at least one of a two-dimensional (2D) image, a 3D image, and a video sequence.

3. The method of claim 1, wherein, while the area of interest on the visual multimedia object is detected, the visual multimedia object is pre-processed by at least one of brightness adjustment, staining, gamma correction, white color balance adjustment, and color system conversion.

4. The method of claim 1, wherein the detecting at least one area of interest comprises detecting a plurality of areas of interest, and
wherein the generating the 3D visual object is performed by randomly selecting a selected number of areas of interest from among the detected plurality of areas of interest.

5. The method of claim 1, wherein the detecting at least one area of interest comprises detecting a plurality of areas of interest, and
wherein the generating the 3D visual object is performed by selecting a selected number of areas of interest from among the detected plurality of areas of interest based on features of the selected number of areas of interest.

6. The method of claim 1, wherein the building the 3D scene is performed by using the visual multimedia object as a texture which is superimposed on a background of the 3D scene.

7. The method of claim 6, wherein the building the 3D scene is performed by detecting information about a scene depth regarding the visual multimedia object, and
wherein the detected information is used for building the background of the 3D scene.

8. The method of claim 1, wherein the conversion of the 3D visual object comprises at least one of moving, rotation, distortion, resizing, and merging of at least two 3D objects, or dividing of a 3D object into at least two new 3D visual objects.

9. The method of claim 1, wherein the visualizing the 3D scene is performed by using the visual multimedia object as a background of the 3D scene, and generating a 3D animation effect for the visual multimedia object.

10. An apparatus for generating a three-dimensional (3D) animation effect on a display, the apparatus comprising:
an interest area detection module configured to detect at least one area of interest on a visual multimedia object;
a feature determining module configured to determine at least one feature of the detected area of interest on the visual multimedia object;
a 3D visual object generation module configured to generate at least one 3D visual object based on the feature of the area of interest;
a 3D-scene generation module configured to generate a 3D scene based on the visual multimedia object and the generated 3D visual object;
a 3D conversion module configured to convert the 3D visual object in a space of the 3D scene; and
a frame generation module configured to generate 3D frames by using the 3D scene that comprises the converted 3D visual object.

11. The apparatus of claim 10, wherein, while the areas of interest on the visual multimedia object are detected, the interest area detection module pre-processes the visual multimedia object by at least one of brightness adjustment, staining, gamma correction, white color balance adjustment, and color system conversion.

12. The apparatus of claim 10, wherein the interest area detection module detects a plurality of areas of interest, and
wherein the 3D visual object generation module generates the 3D visual object by randomly selecting a selected number of areas of interest from among the detected plurality of areas of interest.

13. The apparatus of claim 10, wherein the interest area detection module detects a plurality of areas of interest, and
wherein the 3D visual object generation module generates the 3D visual object by selecting a selected number of areas of interest from among the detected plurality of areas of interest based on features of the selected number of areas of interest.

14. The apparatus of claim 10, wherein the 3D scene generation module generates the 3D scene by using the visual multimedia object as a texture which is superimposed on a background of the 3D scene.

15. The apparatus of claim 15, wherein the 3D scene generation module generates the 3D scene by detecting information about a scene depth regarding the visual multimedia object, and
wherein the detected information is used for generating the background of the 3D scene.
